# EUROPEAN PATENT SPECIFICATION

(11) **EP 2 600 077 B1**
(45) Date of publication and mention of the grant of the patent: **18.11.2015**
(21) Application number: 12195105.7
(22) Date of filing: 30.11.2012
(51) Int. Cl.: F24H 8/00, F24H 9/00, F28G 9/00, F28D 21/00

(54) **Heating device comprising a control unit configured for cleaning a heat exchange surface**
Heizvorrichtung mit einer zum Reinigen einer Wärmetauschoberfläche konfigurierten Steuerungseinheit
Dispositif de chauffage comprenant une unité de commande configurée pour nettoyer une surface d'échange de chaleur

(30) Priority: 01.12.2011 NL 2007913; 01.12.2011 NL 2007915
(43) Date of publication of application: 05.06.2013
(73) Proprietor: ROBERT BOSCH GMBH, 70442 Stuttgart (DE)
(72) Inventor: Galloway, James Graham Mackenzie, 7411 LB Deventer (NL); Schmid, Wolf, 6828 GN Arnhem (NL); Schroten, Harm Jan, 7553 BX Hengelo (NL); Hulshof, Dik Jan, 7161 VW Neede (NL); Pecenko, Alessandro, 7421 BD Deventer (NL); Feberwee, Gerrit Jan, 7425 HL Deventer (NL)
(74) Representative: EP&C

(56) References cited:
- EP-A1- 0 150 694
- WO-A1-93/01462
- DE-A1-102008 018 501
- JP-A- 7 305 998
- US-A- 4 487 139
- US-A1- 2007 062 464

## Description

The invention relates to the field of household and industrial heating devices for providing heated liquid medium to a radiator and/or providing heated tap water. In particular, domestic heating devices are part of a central heating system in building, for example houses. More in particular, the invention relates to the field of cleaning heat exchangers in domestic heating devices, that exchange heat from a gaseous medium, such as a combustion gas or flue gas to a liquid medium, such as water. The heated liquid medium is supplied to a radiator, such as a wall-mounted panel, for heating the building and/or for providing heated tap water.

A heating device normally comprises a heat exchanger having a first heat exchange surface in contact with the liquid medium and a second heat exchange surface in contact with a gaseous medium. The gaseous medium often comprises a combustion gas such as flue gas as a result of burning a supply fuel such as natural gas or a liquid- or solid fuel. The burning results in a heated gaseous medium. The heated gaseous medium exchanges its heat to the liquid medium, such that the liquid medium is heated and is supplied to the radiator. Instead or additionally to a radiator the heated liquid medium is supplied to any heat sink, such as a tap or floor heating.

US-4,487,139 discloses an exhaust gas treatment method and apparatus. It discloses a water-condensing mode which removes particulate matter and condensed acid from the exhaust gas, and washes heat exchange surfaces to keep them clean and wet to improve heat transfer.

Drawback of this heating devices is that an outer heat exchanger surface of the heat exchanger gets polluted and filthy due to contact with the combustion gas. In particular, when the gaseous medium condenses on the outer heat exchanger surface corrosion of the outer heat exchanger surface occurs. Corrosion results in disintegration and degradation of the outer heat exchanger surface due to chemical reactions with its surroundings. In particular, the condensed gaseous medium comprises compounds that chemically react with the outer heat exchange surface.

In particular, when the heating device is operated continuously over time, for example, when the heated liquid medium must be supplied continuously to the radiator, condensate on the outer heat exchange surface degrades the heat exchanger. Although, the condensate on the outer heat exchange surface may be of a relatively low amount, the condensate present on the outer heat exchange surface still degrades the heat exchanger.

It is an object of the present invention to eliminate the abovementioned problem or at least provide an alternative.

In particular it is an object of the present invention to provide a heating device that allows for a longer life and further in particular is less prone to corrosion.

The object is achieved by a heating device according to claim 1.

This heating device is suitable for providing a heated liquid medium to a radiator. Alternatively, the heated liquid is provided as heated tap water to a tap and/or floor heater. The heating device comprises a burner for generating a heated combustion gas. By burning a supply fuel, such as natural gas, the heated combustion gas is generated. The supply fuel can be any combustible medium and can for example be a solid fuel, gas fuel and/or liquid fuel. Examples of the solid fuel are coal or wood. An example of a liquid fuel is oil.

Preferably, the heating device is a household heating device generating up to 70 kW of power for heating the liquid medium. The household heating device therefore does not exceed 70 kW based on a net calorific value and is suitable for being applied in a household environment.

Alternatively, the heating device is an industrial heating device generating more than 70 kW of power for heating the liquid medium. The industrial heating device therefore exceeds 70 kW based on a net calorific value and is suitable for being applied in an industrial environment.

The burner is configured for receiving a burner signal. This results in that the burner can be operated and set to desired conditions representing the received burner signal. The heating device comprises a heat exchanger. The heat exchanger comprises a tube having an inlet opening and an outlet opening. The inlet opening receives the liquid medium and after heating by exchanging heat with the heated combustion gas the heated liquid medium leaves the outlet opening.

Preferably, the inlet opening is arranged at a first end of the tube and the outlet opening is arranged at a second end of the tube.

The outside of the tube defines a first heat exchange surface and is suitable for contacting the combustion gas. The inside of the tube defines a second heat exchange surface and is suitable for contacting the liquid medium. This allows for transferring heat, thus energy, from the combustion gas to the liquid medium, thereby relatively heating the liquid medium and relatively cooling the combustion gas.

The heating device comprises a fan for providing an airflow over the heat exchanger. The fan preferably is a propeller that blows the combustion gas and/or air present from a first desired position towards a second desired position. Further preferably, the first desired position is near the burner and the second desired position is near the heat exchanger. Having an airflow towards the burner results in supplying air for burning the supply fuel. The fan therefore ensures that sufficient air is provided to the burner such that a burning of the supply fuel is established. Having an airflow over the first heat exchange surface allows for cooling due to convective cooling. Cooling occurs when the airflow over the first heat exchanger has a lower temperature than a dew point of the combustion gas. The lower the temperature of the airflow, the more cooling occurs.

Preferably, the fan is directed towards the burner and a heating chamber is arranged with respect to the burner and the heat exchanger such that a generated airflow is directed to and/or guided over the heat exchanger by walls of the heating chamber.

In another preference, when a gaseous supply fuel is used, the supply fuel is provide firstly to the fan and is mixed with air. The mix of supply fuel and air is subsequently blown towards the burner.

The fan is configured for receiving a fan signal. This results in that the fan can be operated and set to desired conditions representing the received fan signal.

The heating device further comprises a pump for pumping the liquid medium into the inlet opening and out of the outlet opening. The pump is configured for receiving a pump signal. This results in that the pump can be operated and set to desired conditions representing the received pump signal.

The heating device further comprises a control unit configured for emitting the burner signal, the fan signal and the pump signal. This allows for emitting the desired conditions for the burner, the fan and the pump respectively.

The control unit is configured for controlling the burner, fan and pump by emitting the respective burner signal, fan signal and pump signal. Preferably, the signals are electric signals.

The emitting of the burner signal, fan signals and pump signal are such that the combustion gas condenses on the first heat exchange surface for cleaning the first heat exchange surface by washing using the condensate.

By emitting the signals to respectively the burner, the fan and the pump a temperature of the first heat exchanger is decreased such that a relatively large amount of condensate is generated that is sufficient to wash the first heat exchange surface. To ensure that sufficient condensate is generated, the burner is set to a burning power level that is lower compared to a full power operative mode of the burner, but not zero, such that combustion gas is supplied to the first heat exchanger. Therefore, the burning power level is smaller or at least reduced with respect to the full power operative mode of the burner, such that a temperature of the first heat exchange surface is kept as low as possible. An active burner ensures supply of the combustion gas to generate the condensate.

Preferably, the fan is turned on, such that the airflow of present air and/or the combustion gas results in a convective cooling of the first heat exchange surface decreasing the temperature of the first heat exchange surface. The decrease of the temperature of the first heat exchange surface results in that the first heat exchange surface reaches a temperature further below the dew point of the combustion gas, ensuring more generation of condensate on the heat exchanger. An amount of condensate is such that it cleans and washes the first heat exchange surface, rather than degrade it. In particular, a rain of condensate is generated on the first heat exchange surface, cleansing and/or washing the first heat exchange surface.

Preferably, a rotation rate of the fan depends on the power level of the burner. The rotation rate is for example set to a high or maximum rotation rate when the burner is switched off. The rotation rate of the fan is decreased when the burner is switched on. The rotation rate is set to a rotation rate such that on the one hand it is maximized to allow further cooling, but is not too high to avoid a blow out of the burner.

Preferably, the fan is simultaneously active when the burner is active for supplying air to the burner.

Preferably, the pump is simultaneously active with the burner and/or the fan.

This is advantageous as a continuously active pump ensure continuous additional cooling of the heat exchanger. Not only the fan cools the heat exchanger, but also the pump, by drawing excess heat from the heat exchanger. Having the pump simultaneous active results in a continuous heat exchange between the first heat exchange surface and the second heat exchange surface, resulting in a further decrease or cooling of the first and second heat exchange surface.

Above features allow for cleaning of the first heat exchange surface resulting in a longer life of the heating device. As a relatively large amount of condensate is generated on the heat exchanger less corrosion occurs as corrosive compounds are cleansed and/or washed away.

The control unit is configured for providing a cleaning cycle that comprises a controlling of the burner, fan and pump by emitting the respective burner signal, fan signal and pump signal, wherein the control unit is configured for setting a duration of the cleaning cycle and a periodicity of the cleaning cycle.

The burner is set to a lower power level compared with the full power operative mode. The fan is set to rotating for allowing convective cooling of the first heat exchange surface.

The pump is pumping the liquid medium, preferably full time during the cleaning cycle.

The steps of burning of supply fuel at a burning power level, rotating the fan and pumping the liquid medium are performed in one cleaning cycle for a predefined duration and with a predefined periodicity.

This is advantageous as it allows planning a cleaning of the heat exchanger at predefined times, for example during night-time.

It is particularly advantageous when the heating device is continuously operative for a long time in the full power operative mode. During this full power operative mode small amounts of condensate may still be generated on the heat exchanger, but is insufficient to cleanse or wash the heat exchanger. In contrary, it degrades the heat exchanger. By means of interrupting the full power operative mode by the cleaning cycle, the control unit ensures that the temperature of the first heat exchanger is periodically decreased such that a sufficient amount of condensate is generated to cleanse or wash the first heat exchange surface.

In an embodiment of the heating device according to the invention, the control unit is configured to set the duration and the periodicity of the cleaning cycle depending on a desired protective layer thickness of an corrosion protective layer on the first heat exchange surface.

The first heat exchange surface is prone to degrade due to mechanical wear and/or chemical attack due to contact with the combustion gas. However, when the first heat exchange surface is in contact with oxygen, it generates a natural oxide layer on the first heat exchange surface. This natural oxide layer is a corrosion protective layer as it is more resistant from corrosion by sulphuric or nitric acids. As the first heat exchange surface is in a highly acid environment due to the combustion gas the oxide layer, i.e. the corrosion protective layer, will dissolve. The corrosion protective layer is regenerated by contacting it again with oxygen. In order to have the first heat exchange surface contact oxygen, the first heat exchange surface is cleaned or washed from acids. By setting the periodicity and duration of the cleaning cycle, the regeneration of the corrosion protective layer is allowed.

As the cleaning cycle is repeating itself by having a periodicity, the corrosion protective layer is regenerating.

Having the corrosion protective layer regenerated is advantageous as it extends the lifetime of the heat exchanger.

In particular, the control unit is configured to set the periodicity and duration such that the corrosion protective layer remains with a minimum protective layer thickness.

The periodicity and duration depends on a desired protective layer thickness. When the first heat exchange surface is in contact with an acid environment for a certain amount of time, the corrosion protective layer is slowly dissolving, i.e. the protective layer thickness is decreasing. The periodicity is set such that the protective layer thickness is not decreasing under a desired minimum protective layer thickness. The duration of the cleaning cycle is set such that sufficient acid is cleansed or washed from the first heat exchange surface, such that the first heat exchange surface contacts oxygen again and a new oxide layer, i.e. corrosion protective layer is formed on the first heat exchange surface.

During the cleaning cycle, the first heat exchanger surface is free from combustion gas, i.e. acids, due to controlling the fan and the burner. This allows regeneration of the corrosion protective layer, i.e. increasing the protective layer thickness.

Preferably, the heat exchanger are made of aluminium. When the first heat exchange surface reacts with oxygen, the corrosion protective layer is a layer of Al₂O₃.

In an embodiment, the control unit is configured to set the periodicity and duration depending, on at least one of, the temperature of an environment around the first heat exchange surface, the acid concentration of the environment around the first heat exchange surface and the material properties of the heat exchanger.

Based on said temperature, said acid concentration and said material properties the duration and periodicity the time to completely dissolve a corrosion protective layer or the rate of dissolving the corrosion protective layer can be calculated. This time and rate can be used to determine and set the periodicity and duration of the cleaning cycle such that a minimum protective layer thickness can be guaranteed.

Material properties are for example the type of material (e.g. aluminium), corrosion resistance, density, specific weight, hygroscopic property, reactivity, surface tension, surface energy, specific internal surface area, pH, etc.

This is advantageous as it minimizes corrosion of the first heat exchange surface due to an acid environment.

A high acid concentration corresponds to a high rate of dissolving the corrosion protective layer and a short time to completely dissolve the corrosion protective layer.

A high temperature corresponds to a high rate of dissolving the corrosion protective layer and a short time to completely dissolve the corrosion protective layer.

In a further embodiment, the control unit is configured to set the periodicity and duration depending on a previous operation time and operation mode of the heating device.

The longer the previous operation time, the more a corrosion protective layer is decreased. Depending on a mode, the corrosion protective layer is decreased with a different rate. Knowing the previous operation time and the operational mode is advantageous as it allows for a more accurate prediction of a time of completely dissolving a corrosion protective layer or a rate of dissolving the corrosion protective layer.

Knowing said time or said rate allows for an optimal setting of duration and periodicity of the cleaning cycle such that a protective layer thickness does not get below a desired minimum protective layer thickness. This may allow for a longer life time of the heat exchanger.

In an embodiment of the heating device according to the invention, the control unit is configured for controlling the burner, fan and pump by emitting the respective burner signal, fan signal and pump signal such that steps are performed that are explained further below. The order of the steps may be arbitrary. One step comprises the burning of gas by the burner at a burning power level such that generated combustion gas condenses on the first heat exchange surface. Another step is rotating the fan at a rotation rate for providing an airflow contacting the first heat exchange surface such that a convective cooling of the first heat exchange surface is provided. Another step is pumping the liquid medium into the heat exchanger by the pump such that excess heat in the heat exchanger is drawn out of the outlet opening.

This is advantageous as a combination of these steps on the one hand sufficiently cools down the first heat exchange surface for condensing the combustion gas and on the other hand brings combustion gas in contact with the first heat exchange surface. This results in a supply of condensate to the first heat exchange surface such that the first heat exchange surface is cleansed and or washed away by the condensate and cleaned.

An amount of the supplied condensate is relatively large compared to when the heating device is continuously operative at the full power operative mode. Condensate generated in the full power operative mode adversely works on the first heat exchange surface as the amount of condensate is relatively small and is insufficient to cleanse and/or wash the heat exchange surface. In contrary, this small amount of condensate degrades the heat exchanger due to corrosion. The small amount of condensate generally is generated when the full power operative mode typically operates at 40 to 50 degrees. Preferably, the signals are emitted such that operating the burner, the fan and the pump brings the temperature of the first heat exchange surface further below 40 degrees, preferably at 10 degrees.

In a further embodiment the control unit is configured for controlling the burner and fan by emitting the respective burner signal and fan signal such that the burning of a supply fuel by the burner at the burning power level is performed sequentially with a rotating of the fan at a high rotation rate.

This is advantageous as the rotating of the fan ensures convective cooling of the first heat exchange surface. This is more effective when no heated combustion gas is supplied to the first heat exchange surface. Therefore, the burner is turned off during the rotation of the fan at a high rotation rate to ensure optimal cooling. When the heat exchanger is sufficiently cooled by the fan and the pump the fan is switched to a lower rotation rate and the burner is switched on at a burning level being relative low. The burning level is low such that on the one hand combustion gas is supplied to the first heat exchange surface and on the other hand the temperature is decreased with respect to the full power operative mode.

In an alternative, the heating device is continuously operative for a long time in a normal power operative mode, in which the amount of power depends on a demand of temperature of the heated liquid medium.

Preferably, the control unit is configured for providing a cleaning cycle having a duration equal to or shorter than 5 minutes and a periodicity of one cleaning cycle every 24 hours.

This has as advantage that once a day sufficient condensate is generated to cleanse and/or wash the first heat exchange surface. In particular, it is advantageous when the heating device is continuously in full power operative mode and is interrupted by the cleaning cycle. When no cleaning cycle is present, only small amounts of condensate are generated which is insufficient to clean the first heat exchange surface. Having one cleaning cycle of 5 minutes results in the generation of a relatively large amount of condensate to cleanse and/or wash the first heat exchanger surface.

In a further embodiment, the control unit is configured for providing more than one cleaning cycles being continuously successive with respect to each other, wherein the control unit is configured for setting a duration of the more than one cleaning cycles and a periodicity of the more than one cleaning cycles.

Preferably, the continuously successive cleaning cycles are performed during a low need of heated liquid medium. This for example is during nighttimes.

This has as advantage that it allows for multiple cleaning cycles resulting in more condensate to cleanse and/or wash the first heat exchange surface. As one cleaning cycle may result in condensate on the heat exchanger, a second cleaning cycle or more cleaning cycles result in even more condensate. The successive cleaning cycles increase in effectiveness as at a start of a successive cleaning cycle the temperature has already been decreased by the previous cleaning cycle. Thus, when a first cleaning cycle starts another successive second cleaning cycle of controlling the burner, fan and pump the temperature of the heat exchanger decreases the temperature of the heat exchanger even further. This allows for generating more condensate to cleanse and/or wash the first heat exchanger surface.

Preferably, the control unit is configured for providing more than one cleaning cycles being continuously successive having a total duration of 30 minutes and a periodicity of once every 24 hours.

This is advantageous as once every day a relatively large amount of condensate to cleanse and/or wash the first heat exchange surface is generated. Preferably, the total duration of the continuously successive cleaning cycles is performed during a low need of heated liquid medium. This for example is during nighttimes.

In a further embodiment, the control unit is configured for providing 6 cleaning cycles being continuously successive with respect to each other in 30 minutes.

This is advantageous as it generates a relatively large amount of condensate to cleanse and/or wash the first heat exchange surface.

In an embodiment the heating device is an industrial heating device. The industrial heating device further comprises cooling means for receiving the heated liquid medium and returning cooled liquid medium to the heat exchanger.

The cooling means is for example a second heat exchanger. It may be located near the first heat exchanger or it may be located away from the first heat exchanger. The industrial heat exchanger is a closed system in which the heated liquid medium is returned to the industrial heating device to be provided to the second heat exchange surface. Normally, the heated liquid medium is cooled down due to energy losses as for example heat is dissipated in a room by the radiator or any other heat sink. However, this cooling may not be sufficient. This embodiment is advantageous as it further cools down the second heat exchange surface, and thus the heat exchanger, by providing cooled liquid medium from the cooling means. A further advantage is that this allows for a reduced duration and periodicity of a cleaning cycle, thus resulting in less interruption of an industrial process.

The invention also relates to a method for cleaning a heat exchanger in a heating device.

Methods for cleaning a heat exchanger in a heating device are for example known from US-4,487,139. This publication shows the preamble of claim 10.

It is an object of the present invention to eliminate the problems of the known method or at least provide an alternative.

In particular it is an object of the present invention to provide a method for cleaning a heating device that allows for a longer life and further in particular is less prone to corrosion.

The object is achieved by the method for cleaning a heating device according to claim 10.

The method is suitable for a heating device that comprises a burner for generating a heated combustion gas and a fan for providing an airflow over the heat exchanger. The heating device further comprises the heat exchanger. The heat exchanger comprising a tube having an inlet opening and an outlet opening, wherein the outside of the tube defines a first heat exchange surface for contacting the combustion gas. The inside of the tube defines a second heat exchange surface for contacting the liquid medium. The heating device further comprising a pump for pumping the liquid medium into the inlet opening and out of the outlet opening.

The method comprises the fan providing an airflow contacting the first heat exchange surface such that a convective cooling of the first heat exchange surface is provided.

The method comprises the step of pumping the liquid medium into the heat exchanger by the pump such that excess heat in the heat exchanger is drawn out of the outlet opening.

The method also comprises the step of burning of a supply fuel by the burner at a burning power level such that generated combustion gas condenses on the first heat exchange surface for cleaning the first heat exchange surface by washing using the condensate.

By performing the steps of rotating the fan, pumping the liquid medium and burning of the supply fuel the first heat exchange surface is on the one hand cooled or decreased in temperature to condense combustion gas and on the other hand allows for a supply of combustion gas to the first heat exchanger, such that the combustion gas is condensed on the first heat exchange surface.

The steps allow for a cooling of the first heat exchanger such that a relatively large amount of condensate is generated on the first heat exchanger such that a washing or cleansing of the first heat exchange surface is possible. In particular, the amount is relatively large compared to a small amount of condensate that results from a continuous full power operative mode of the heating device. Such a small amount has an adverse effect on the first heat exchange surface as it degrades it due to corrosion.

Preferably, the pump is simultaneously operative with the burner and/or the fan.

This is advantageous as a continuously active pump ensure continuous additional cooling of the heat exchanger. Not only the fan cools the heat exchanger, but also the pump, by drawing excess heat from the heat exchanger. Having the pump simultaneous active results in a continuous heat exchange between the first heat exchange surface and the second heat exchange surface, resulting in a further decrease or cooling of the first and second heat exchange surface.

In an embodiment, the method further comprises the steps of sequentially rotating the fan at a high rotation rate and the burning of the supply fuel by the burner at the burning power level.

This is advantageous as the rotating of the fan ensures convective cooling of the first heat exchange surface. This is more effective when no heated combustion gas is supplied to the first heat exchange surface and the burner is switched off. Therefore, the burner is turned off during the rotation of the fan at the high rotation rate to ensure optimal cooling. When the heat exchanger is sufficiently cooled by the fan and the pump, the fan is switched to a lower rotation rate and the burner is switched on. The burning level is relatively low such that on the one hand combustion gas is supplied to the first heat exchange surface and on the other hand the temperature is decreased with respect to the full power operative mode.

In an embodiment of the method, the liquid medium is pumped by the pump simultaneously with rotating the fan and/or the burning of the supply fuel by the burner at the burning power level.

This is advantageous as a continuously active pump ensure continuous additional cooling of the heat exchanger. Not only the fan cools the heat exchanger, but also the pump, by drawing excess heat from the heat exchanger. Having the pump simultaneous active results in a continuous heat exchange between the first heat exchange surface and the second heat exchange surface, resulting in a further decrease or cooling of the first and second heat exchange surface.

In an embodiment of the method, the method comprises the step of setting the duration and the periodicity of the cleaning cycle depending on a desired protective layer thickness of a corrosion protective layer of the first heat exchange surface.

The first heat exchange surface is prone to degrade due to mechanical wear and/or chemical attack due to contact with the combustion gas. However, when the first heat exchange surface is in contact with oxygen, it develops a natural oxide layer on the first heat exchange surface. This natural oxide layer is a corrosion protective layer as it is more resistant from corrosion by sulphuric or nitric acids. As the first heat exchange surface is in a highly acid environment due to the combustion gas the oxide layer, i.e. the corrosion protective layer, will dissolve. The corrosion protective layer is regenerated by contacting it again with oxygen. In order to have the first heat exchange surface contact oxygen, the first heat exchange surface is cleaned or washed from acids. By setting the periodicity and duration of the cleaning cycle, the regeneration of the corrosion protective layer is allowed.

As the cleaning cycle is repeated with a certain periodicity, the corrosion protective layer is allowed to regenerate during each cleaning cycle duration.

Having the corrosion protective layer regenerated is advantageous as it extends the lifetime of the heat exchanger.

In particular, the method comprises the step of setting the periodicity and duration of the cleaning cycle such that the corrosion protective layer remains with a minimum protective layer thickness.

The periodicity and duration depends on a desired protective layer thickness. When the first heat exchange surface is in contact with an acid environment for a certain amount of time, the corrosion protective layer is slowly dissolving, i.e. the protective layer thickness is decreasing. The periodicity is set such that the protective layer thickness is not decreasing under a desired minimum protective layer thickness. The duration of the cleaning cycle is set such that sufficient acid is cleansed or washed from the first heat exchange surface, such that the first heat exchange surface contacts oxygen again and a new oxide layer, i.e. corrosion protective layer is formed on the first heat exchange surface.

During the cleaning cycle, the first heat exchanger surface is free from combustion gas, i.e. acids, due to controlling the fan and the burner. This allows regeneration of the corrosion protective layer, i.e. increasing the protective layer thickness.

Preferably, the heat exchanger is made of aluminium. When the first heat exchange surface reacts with oxygen, the corrosion protective layer is a layer of Al₂O₃.

In an embodiment, the method comprises the step of setting the periodicity and duration of the cleaning cycle depending on the temperature of an environment around the first heat exchange surface, the acid concentration of the environment around the first heat exchange surface and the material properties of the heat exchanger.

The periodicity and duration is set such that a desired minimum thickness of a corrosion protective layer is maintained.

Based on said temperature, said acid concentration and said material properties the duration and periodicity the time to completely dissolve a corrosion protective layer or the rate of dissolving the corrosion protective layer can be calculated. This time and rate can be used to determine and set the periodicity and duration of the cleaning cycle such that a minimum protective layer thickness can be guaranteed.

This is advantageous as it minimizes corrosion of the first heat exchange surface due to an acid environment.

A high acid concentration corresponds to a high rate of dissolving the corrosion protective layer and a short time to completely dissolve the corrosion protective layer.

A high temperature corresponds to a high rate of dissolving the corrosion protective layer and a short time to completely dissolve the corrosion protective layer.

In a further embodiment, the method comprises the step of setting the periodicity and duration of the cleaning cycle depending on a previous operation time and operation mode of the heating device.

The longer the previous operation time, the more a corrosion protective layer is decreased. Depending on a mode, the corrosion protective layer is decreased with a different rate. Knowing the previous operation time and the operational mode is advantageous as it allows for a more accurate prediction of a time of completely dissolving a corrosion protective layer or a rate of dissolving the corrosion protective layer.

Knowing said time or said rate allows for an optimal setting of duration and periodicity of the cleaning cycle such that a protective layer thickness does not get below a desired minimum protective layer thickness. This may allow for a longer life time of the heat exchanger.

In an embodiment of the method, a cleaning cycle comprising the steps of rotating the fan, pumping the liquid medium and burning the supply fuel by the burner at the burning power level is performed for a predetermined duration and a predetermined periodicity.

This is advantageous as it allows planning a cleaning of the heat exchanger at predefined times, for example during nighttimes.

It is particularly advantageous when the heating device is continuously operative for a long time in the full power operative mode. During this full power operative mode small amounts of condensate may still be generated on the heat exchanger, but is insufficient to cleanse or wash the heat exchanger. In contrary, it degrades the heat exchanger. By means of interrupting the full power operative mode by the cleaning cycle it is ensured that the temperature of the first heat exchanger is periodically decreased such that a sufficient amount of condensate is generated to cleanse or wash the first heat exchange surface.

Alternatively, the heating device is continuously operative for a long time in a normal power operative mode, in which the amount of power depends on a demand of temperature of the heated liquid medium.

In a further embodiment of the predetermined duration is 5 minutes and the predetermined periodicity is one cleaning cycle every 24 hours.

This has as advantage that once a day sufficient condensate is generated to cleanse and/or wash the first heat exchange surface. In particular, it is advantageous when the heating device is continuously in full power operative mode and is interrupted by the cleaning cycle. When no cleaning cycle is present, only small amounts of condensate are generated which is insufficient to clean the first heat exchange surface. Having one cleaning cycle of 5 minutes results in the generation of a relatively large amount of condensate to cleanse and/or wash the first heat exchanger surface.

In a further embodiment, the method further comprises the step of performing multiple cleaning cycles being continuously successive with a predetermined duration and a predetermined periodicity.

Preferably, the continuously successive cleaning cycles are performed during a low need of heated liquid medium. This for example is during nighttimes.

This has as advantage that it allows for multiple cleaning cycles resulting in more condensate to cleanse and/or wash the first heat exchange surface. As one cleaning cycle may result in condensate on the heat exchanger, a second cleaning cycle or more cleaning cycles result in even more condensate. The successive cleaning cycles increase in effectiveness as at a start of a successive cleaning cycle the temperature has already been decreased by the previous cleaning cycle. Thus, when a first cleaning cycle starts another successive second cleaning cycle of controlling the burner, fan and pump the temperature of the heat exchanger decreases the temperature of the heat exchanger even further. This allows for generating more condensate to cleanse and/or wash the first heat exchanger surface.

In an even further embodiment, the predetermined duration of the multiple cleaning cycles is 30 minutes and the predetermined periodicity of the multiple cleaning cycles is once every 24 hours.

This is advantageous as once every day a relatively large amount of condensate to cleanse and/or wash the first heat exchange surface is generated. Preferably, the total duration of the continuously successive cleaning cycles is performed during a low need of heated liquid medium. This for example is during nighttimes.

In an embodiment of the method according to the invention, the method further comprises the step of cooling the heated liquid medium by means of cooling means and returning cooled liquid medium to the heat exchanger.

The cooling means is for example a second heat exchanger. It may be located near the first heat exchanger or it may be located away from the first heat exchanger. The industrial heat exchanger is a closed system in which the heated liquid medium is returned to the industrial heating device to be provided to the second heat exchange surface. Normally, the heated liquid medium is cooled down due to energy losses as for example heat is dissipated in a room by the radiator or any other heat sink. However, this cooling may not be sufficient. This embodiment is advantageous as it further cools down the second heat exchange surface, and thus the heat exchanger, by providing cooled liquid medium from the cooling means. A further advantage is that this allows for a reduced duration and periodicity of a cleaning cycle thus resulting in less interruption of an industrial process.

These and other aspect of the invention will be more readily appreciated as the same becomes better understood by reference to the following detailed description and considered in connection with the accompanying drawings in which like reference symbols designate like parts.
Figure 1 shows an embodiment of a heating device according to the invention.
Figure 2 shows an embodiment of a cleaning cycle performed by a heating device according to the invention.
Figure 3 shows an embodiment of a number of continuous successive cleaning cycles performed by a heating device according to the invention.
Figure 4 shows an embodiment of an industrial heating device according to the invention.
Figure 5a, 5b, 5c and 5d show a regeneration of a corrosion protective layer on a first heat exchanger surface.

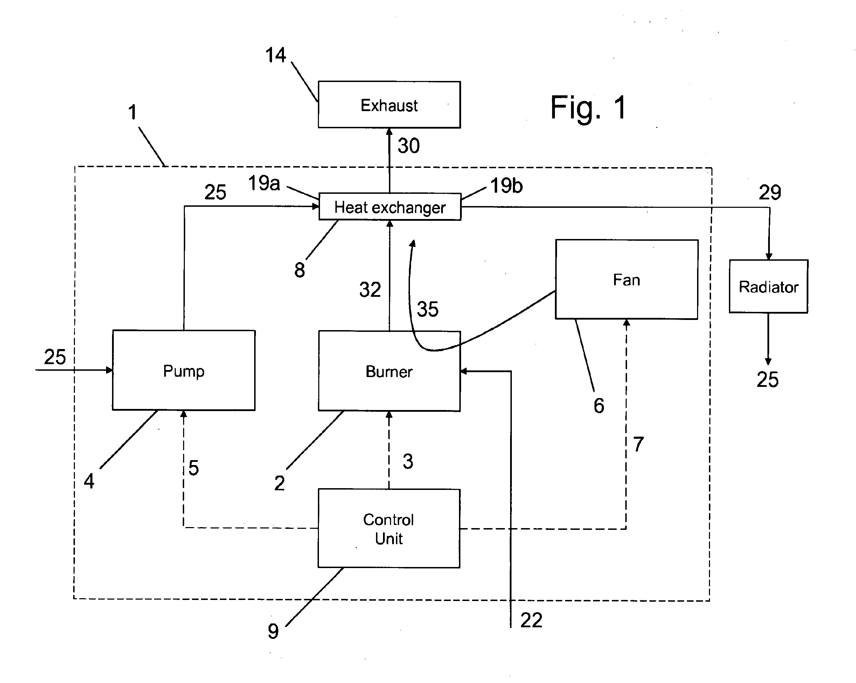

Figure 1 shows a schematic drawing of a heating device 1 according to the invention. The heating device is suitable for providing a heated liquid medium 29 to a radiator 11. The radiator 11 is for example located in a room to be heated. Alternatively, the radiator 11 is a floor heater or any other heat sink.

The heating device 1 comprises a burner 2 for generating a heated combustion gas 32. The heated combustion gas 32 is provided to a heat exchanger 8, for example by means of a heating chamber (not shown). The burner 2 is configured for receiving a burner signal 3 from a control unit 3. This way a desired condition for the burner 2 can be set. In particular, a power level of the burner 2 can be set by the control unit 3. The control unit 3 is configured to provide the burner signal 3 being representative to the power level. In particular, the burner 2 is provided with a supply fuel 22 for example a natural gas. The power level can for example be controlled by controlling an amount of the supply fuel 22 that is supplied to the burner. The supply fuel 22 is burned resulting in generating the heated combustion gas 32. Often, the heating device if continuously operative in a full power operative mode. During this mode, small amounts of condensate is generated on the heat exchanger 8 which has an adverse effect as it degrades an outer heat exchange surface that is in contact with the combustion gas 32.

Alternatively, the heating device 1 operates in a normal power operative mode, wherein the amount of power to be generated depends on a demand of the to be heated room.

The heating device 1 comprises the heat exchanger 8. The heat exchanger 8 comprises a tube. The tube comprises an inlet opening 19a and an outlet opening 19b. The outside of the tube defines a first heat exchange surface, being the outer heat exchange surface, for contacting the heated combustion gas 32. The heat exchanger 8 for example is placed in the heating chamber such that the heated combustion gas 32 is able to contact the first heat exchange surface. The inside of the tube defines a second heat exchange surface for contacting relatively cold liquid medium 25 pumped into the heat exchanger 8. Liquid medium 25 enters the inlet opening 19a and heated liquid medium 19b leaves the outlet opening 19b.

Particularly, the heating device 1 is part of a closed central heating system, such that heated liquid medium 29 is provided to the radiator 11 and cooled off liquid medium 25 is fed back into the heating device 1.

The heating device 1 comprises a fan 6 for providing an airflow 35 over the first heat exchange surface. This way the first heat exchange surface is cooled. The fan 6 is configured for receiving a fan signal 7 from the control unit 9. This way a desired condition of the fan can be set. Particularly, the control unit 3 is configured to provide the fan signal 7 being representative to a rotation rate of the fan 6. Rotating the fan 6 results in an air- and/or combustion gas flow over the first heat exchange surface. This results in convective cooling of the first heat exchange surface. Depending on the operative mode of the burner 2 an airflow 35 or a combustion gas flow is generated. When the burner 2 is switched off an airflow is generated and when the burner 2 is switched on a combustion gas flow is generate. Preferably an airflow 35 is generated over the first heat exchange surface as this is colder compared to a combustion gas flow.

The heating device 1 further comprises a pump 4 for pumping the liquid medium 25 into the inlet opening 19a and out of the outlet opening 19b. The pump 4 is configured for receiving a pump signal 5 from the control unit 9. This way the pump 4 can be set into a desired condition. Particularly, the control unit 3 is configured to provide the pump signal 5 being representative to a pumping power of the pump 4. Pumping the liquid medium 25 into the heat exchanger 8 results in drawing excess heat out of the outlet opening 19b. The liquid medium 25 is heated into the heated liquid medium 29 and the combustion gas 32 is cooled off resulting in cooled combustion gas 30. The cooled combustion gas 30 may leave the heating device 1 by means of an exhaust 14.

The heating device 1 comprises the control unit 9. The control unit 9 is configured for emitting the burner signal 3, the fan signal 7 and the pump signal 5.

The control unit 9 is configured for controlling the burner 2, fan 4 and pump 6 by emitting the respective burner signal 3, fan signal 7 and pump signal 5 such that the combustion gas 32 condenses on the first heat exchange surface for cleaning the first heat exchange surface by washing using the condensate.

Emitting the respective signals 3, 7, 5 allows for interrupting the full- or normal power operative mode such that the first heat exchange surface is cooled off by means of pumping the liquid medium through the heat exchanger and turning on the fan 5. It is mandatory to also burn supply fuel 22 to bring the first heat exchanger surface in contact with combustion gas 32. However, the power level of the burner 22 is set lower compared to the full power operative mode. This way, on the one hand combustion gas 32 is supplied to the first heat exchange surface to condense and on the other hand the temperature is reduced compared to the full power operative mode. This results in a relatively large amount of condensate on the first heat exchange surface suitable and sufficient for washing the first heat exchange surface.

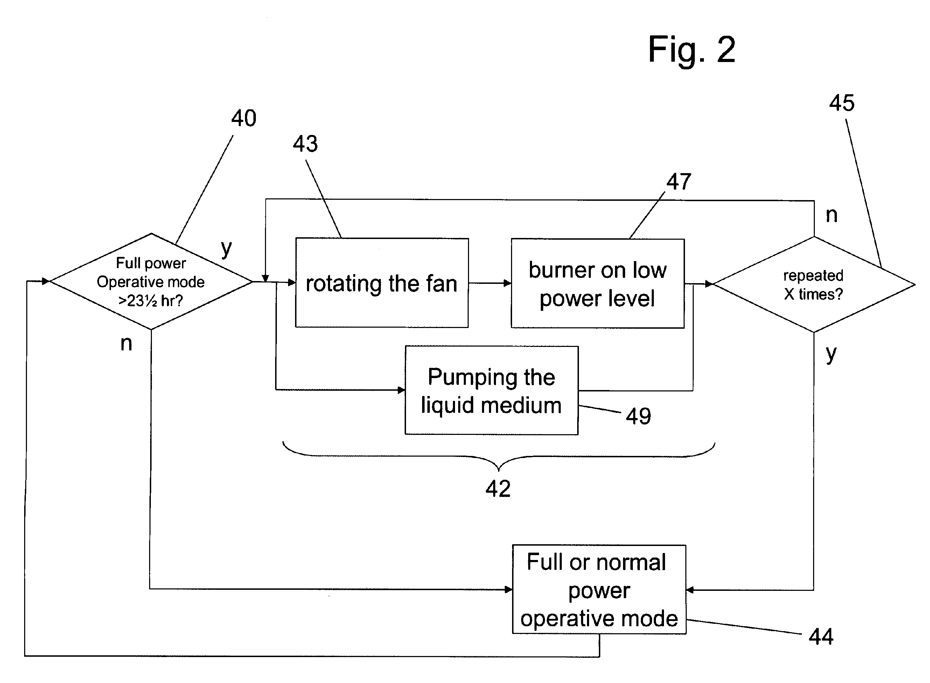

Figure 2 shows a cleaning cycle 42 performed by a heating device 1 according to the invention.

The cleaning cycle 42 is indicated by means of steps performed by the fan 6, burner 2 and pump 4 respectively. The cleaning cycle 42 comprises a high rotation fan rate step 43, a low power level burning step 47 and a pumping step 49. The rotating of the fan 6 at a high rotation rate is performed first to cool down the heat exchanger. Successively the rotating of the fan 6 is switched to a low rotation rate and the burner 2 is set to a low power level, that is a power level lower than the full power operative mode. This results in supplying combustion gas 32 to the heat exchanger 8 such that it condenses on the first heat exchange surface. Simultaneously, the pump 4 pumps the liquid through the heat exchanger 8 to further cool down the first heat exchange surface. This completes one cleaning cycle 42.

The control unit 9 is configured for setting a duration of the cleaning cycle 42. For example, the duration of the cleaning cycle may be 5 minutes of which 2,5 minutes is rotating the fan and 2,5 minutes is burning at the low power level. The duration of the cleaning cycle 42 is therefore predefined.

The periodicity is for example set to once 24 hours, but can also be set to other values. This results in the periodicity to be predefined. A first timer 40 checks how long the heating device is operative in the full power operative mode 44. If is the case that the heating device is operative for than 23.5 hours the cleaning cycle is started. If this is not the case, the heating device 1 remains in the full power operative mode 44.

When the heating device starts with the cleaning cycle 42, it shall repeat cleaning cycles for half an hour. The number of repeats X depends on the duration of one cleaning cycle 42. If one cleaning cycle 42 takes 5 minutes, the number of repeats X shall be 6. A second timer 45 checks if this is the case. Note, that the multiple cleaning cycles are continuously successive and have in this example a total duration of 30 minutes.

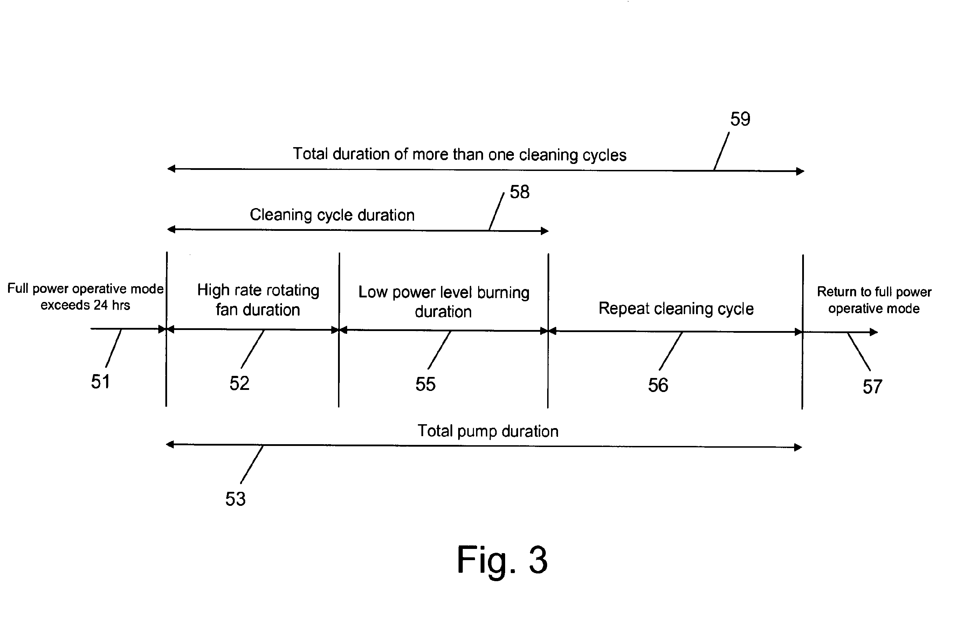

Figure 3, shows another schematic overview of more than one cleaning cycles being continuously successive.

Shown is a total duration 59 of more than one cleaning cycles, being continuous successive, which is the sum of multiple cleaning cycle durations 58. One cleaning cycle duration 58 is equal to the sum of a high rate rotating fan duration 52 and a low power level burning duration 55 as the high rate rotating of the fan and the burning is performed sequential and successive. Simultaneously, the pump 4 is pumping for a time equal to a pumping duration.

As cleaning cycles are repeated when the full power operative mode exceeds 24 hours, the total duration 59 of the continuous successive cleaning cycles is equal to the pumping duration 59.

The control unit 9 is configured to set the durations 52, 55, 53, 59, 58 and transmit corresponding signals 3, 5, 7 to the fan 6, burner 2 and pump 4.

This way the heat exchanger 8, in particular the first heat exchange surface, is sufficiently cooled to condense the combustion gas 32 such that the first heat exchange surface can be washed and cleansed.

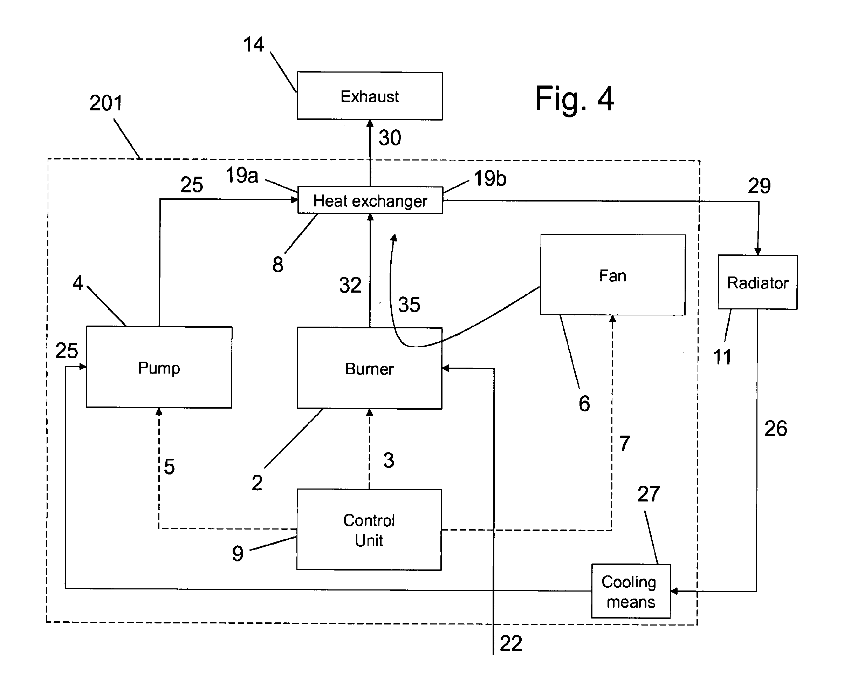

Figure 4 shows an industrial heating device 201 comprising the same features as the heating device of figure 1. Here, the industrial heating device 201 further comprises cooling means 27 which receives liquid medium 26 from the radiator 11 and further cools the received liquid medium 26 to the relatively cold liquid medium 25.

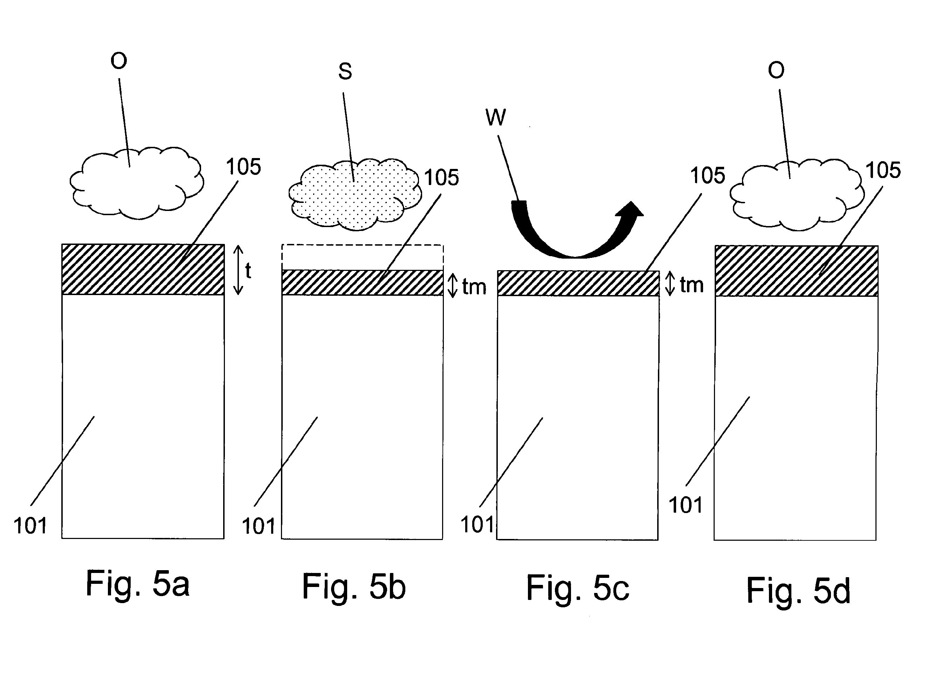

Figure 5a, 5b, 5c and 5d show a regeneration of a corrosion protective layer 105 on a first heat exchanger surface 101.

Figure 5a shows a first heat exchanger surface 101 comprising the corrosion protective layer 105. The corrosion protective layer 105 is generated, i.e. increasing in protective layer thickness t, when the material of the first heat exchanger surface 101 contacts oxygen O.

Figure 5b shows that in an acid environment the corrosion protective layer 105 is decreasing in thickness t. The corrosion protective layer 105 is contacting acid S and as a result dissolves.

Figure 5c shows that water W is used to cleanse or wash the first heat exchanger surface 105 and therefore the corrosion protective layer 105 is cleansed or washed.

Figure 5d shows that the corrosion protective layer 105 is washed and oxygen O, not being acid, allows for regenerating, i.e. increasing, the protective layer thickness t.

The duration and the periodicity of a cleaning cycle is set depending on a desired amount of regeneration of the corrosion protective layer 105 on the first heat exchange surface 101.

As seen in figure 5b, the first heat exchange surface 5b is prone to degrade due to mechanical wear and/or chemical attack due to contact with acids S in a combustion gas. When the first heat exchange surface 101 is in contact with oxygen O, it develops a natural oxide layer, i.e. corrosion protective layer 105 on the first heat exchange surface 101.

Figures 5c, 5d and 5a show the heating device during the cleaning cycle duration. Here, the burner is preferably at a low power level burning and the fan is at a high rotation level. This allows for removing the environment around the first heat exchange surface 101 from acids S and allowing the corrosion protective layer 105 contacting oxygen O.

The corrosion protective layer 105 is regenerating, i.e. the protective layer thickness t is increasing.

In particular the periodicity and duration of the cleaning cycle is such that the corrosion protective layer 105 remains with a minimum protective layer thickness tm.

The periodicity and duration depends on a desired protective layer thickness t. Preferably, the heat exchanger is made of aluminium. When the first heat exchange surface reacts with oxygen, the corrosion protective layer is a layer of Al₂O₃.

The heating device according to the invention is not limited to the described embodiments. Any combination of the described embodiments is possible and foreseen, within the scope of the claims.

In an embodiment, the heating device is an industrial applied heating device.

In an embodiment, the heated liquid water is provided to a tap.

In an embodiment, the periodicity of one cleaning cycle is 12 hours.

In an embodiment, the periodicity of more than one cleaning cycles is 12 hours.

In an embodiment, the duration of one cleaning cycle is less than 10 minutes, particularly less than 5 minutes, more particularly less than 3 minutes.

In an embodiment, the duration of more than one cleaning cycles is less than 60 minutes, particularly less than 30 minutes, more particularly less than 10 minutes.

In an embodiment, the duration of one cleaning cycle is more than 2 minutes.

In an embodiment, the heated liquid medium is supplied to any heat sink, such as a tap and/or floor heating and/or radiator.

In an embodiment, the duration of one cleaning cycle and/or duration of more than one cleaning cycles and/or periodicity of one cleaning cycle and/or periodicity of the more than one cleaning cycles depends on a generated power by the heating device.

In a further embodiment, the duration is increased when the generated power is relatively high and the duration is decreased when the generated power is relatively high.

In an alternative, the duration is increased when a difference between a dew point of a combustion gas and a temperature of the combustion gas is relatively high and the duration is decreased when the difference is relatively low.

In a further embodiment, the periodicity is increased when the generated power is relatively high and the duration is decreased when the generated power is relatively high.

In an alternative, the periodicity is increased when a difference between a dew point of a combustion gas and a temperature of the combustion gas is relatively high and the duration is decreased when the difference is relatively low.

In an embodiment, the heat exchanger is made from aluminium 230 (10% silicon). This is advantageous as when it reacts with oxygen to generate a corrosion protective layer silicon is comprised in the corrosion protective layer further protecting the first heat exchanger surface from an acid environment.

In an embodiment, the duration and periodicity of the cleaning cycle depends on below table representing corrosion rate as a function of temperature and acid concentration:

| Temp.\Conc. | 30% | 40% | 60% |
|---|---|---|---|
| 60°C | 8.4 mm/h | 16.9 mm/h | 23.6 mm/h |
| 80°C | 63.6 mm/h | 70.9 mm/h | 71.9 mm/h |
| 100°C | 96.7 mm/h | 71.2 mm/h | 95.9 mm/h |

Here the rate of corrosion is expressed in terms of millimetres per hour.

The invention further relates to a household heating device, comprising a heating device according to one of the above embodiments.

The invention further relates to an industrial heating device, comprising a heating device according to one of the above embodiments.

As required, detailed embodiments of the present invention are disclosed herein; however, it is to be understood that the disclosed embodiments are merely exemplary of the invention, which can be embodied in various forms. Further, the terms and phrases used herein are not intended to be limiting, but rather, to provide an understandable description of the invention.

The terms "a" or "an", as used herein, are defined as one or more than one. The term " multiple", as used herein, is defined as two or more than two. The term "another", as used herein, is defined as at least a second or more. The terms "including" and/or "having", as used herein, are defined as comprising (i.e. open language, not excluding other elements or steps). Any reference signs in the claims should not be construed as limiting the scope of the claims of the invention.

The mere fact that certain measures are recited in mutually different dependent claims does not indicate that a combination of these measures cannot be used to advantage.

## Claims

1. Heating device (1) for providing a heated liquid medium (29), comprising:
- a burner (2) for generating a heated combustion gas, wherein the burner (2) is configured for receiving a burner signal (3);
- a heat exchanger (8) comprising a tube having an inlet opening (19a) and an outlet opening (19b), the outside of the tube defining a first heat exchange surface (105) for contacting the combustion gas (32) and the inside of the tube defining a second heat exchange surface for contacting the liquid medium;
- a fan (6) for providing an airflow over the heat exchanger (8), wherein the fan (6) is configured for receiving a fan signal (7);
- a pump (4) for pumping the liquid medium into the inlet opening (19a) and out of the outlet opening (19b), wherein the pump (4) is configured for receiving a pump signal (5);
wherein the heating device is configured to operate such that the combustion gas (32) condenses on the first heat exchange surface (105) for cleaning the first heat exchange surface (105) by washing using the condensate,
**characterized by**
- a control unit (9) configured for emitting the burner signal (3), the fan signal (7) and the pump signal (5), wherein the control unit (9) is configured for providing a cleaning cycle that comprises a controlling of the burner (2), fan (6) and pump (4) by emitting the respective burner signal (3), fan signal (7) and pump signal (5), wherein the control unit (9) is configured for setting a duration of the cleaning cycle and a periodicity of the cleaning cycle.

2. Heating device (1) according to claim 1, wherein the control unit (9) is configured to set the duration and the periodicity of the cleaning cycle depending on a desired protective layer thickness (t) of an corrosion protective layer (101) on the first heat exchange surface (105).

3. Heating device (1) according to one of the preceding claims, wherein the control unit (9) is configured to set the periodicity and duration depending on the temperature of an environment around the first heat exchange surface (105), the acid concentration of the environment around the first heat exchange surface (105) and the material properties of the heat exchanger (8).

4. Heating device (1) according to one of the preceding claims, wherein the control unit (9) is configured to set the periodicity and duration depending on a previous operation time and operation mode of the heating device (1).

5. Heating device (1) according to one of the preceding claims, wherein the control unit (9) is configured for controlling the burner (2), fan (6) and pump (4) by emitting the respective burner signal (3), fan signal (7) and pump signal (5) such that the following steps are performed:
- burning of a supply fuel by the burner (2) at a burning power level such that generated combustion gas (32) condenses on the first heat exchange surface (105);
- rotating the fan (6) for providing an airflow contacting the first heat exchange surface (105) such that a convective cooling of the first heat exchange surface (105) is provided;
- pumping the liquid medium into the heat exchanger (8) by the pump (4) such that excess heat in the heat exchanger (8) is drawn out of the outlet opening (19b).

6. Heating device (1) according to one of the preceding claims, wherein the control unit (9) is configured for controlling the burner (2) and fan (6) by emitting the respective burner signal (3) and fan signal (7) such that a burning of the supply fuel by the burner (2) at the burning power level is performed sequentially with a rotating of the fan (6) at a high rotation rate.

7. Heating device (1) according to one of the preceding claims, wherein the control unit (9) is configured for:
- providing a cleaning cycle having a duration equal to or shorter than 5 minutes and a periodicity of one cleaning cycle every 24 hours and/or
- providing more than one cleaning cycles being continuously successive with respect to each other, wherein the control unit (9) is configured for setting a duration of the more than one cleaning cycles and a periodicity of the more than one cleaning cycles.

8. Heating device (1) according to one of the preceding claims, wherein the control unit (9) is configured for:
- providing more than one cleaning cycles being continuously successive having a total duration of 30 minutes and a periodicity of once every 24 hours and/or
- providing 6 cleaning cycles being continuously successive with respect to each other in 30 minutes.

9. Industrial heating device (201), comprising a heating device (1) according to one of claims 1-8, wherein the industrial heating device (201) further comprises cooling means for receiving the heated liquid medium (29) and returning cooled liquid medium to the heat exchanger (8).

10. Method for cleaning a heat exchanger (8) in a heating device (1), the heating device (1) comprising a burner (2) for generating a heated combustion gas (32) and a fan (6) for providing an airflow over the heat exchanger (8), the heating device (1) further comprising the heat exchanger (8) comprising a tube having an inlet opening (19a) and an outlet opening (19b), the outside of the tube defining a first heat exchange surface (105) for contacting the combustion gas (32) and the inside of the tube defining a second heat exchange surface for contacting a liquid medium, the heating device (1) further comprising a pump (4) for pumping the liquid medium into the inlet opening (19a) and out of the outlet opening (19b), wherein the method comprises the steps of:
- providing, by the fan (6), an airflow contacting the first heat exchange surface (105) such that a convective cooling of the first heat exchange surface (105) is provided;
- pumping the liquid medium into the heat exchanger (8) by the pump (4) such that excess heat in the heat exchanger (8) is drawn out of the outlet opening (19b);
- burning of a supply fuel by the burner (2) at a burning power level such that generated combustion gas (32) condenses on the first heat exchange surface (105) for cleaning the first heat exchange surface (105) by washing using the condensate,
**characterized in that** a cleaning cycle comprising the steps of providing the airflow, pumping the liquid medium and burning the supply fuel by the burner (2) at the burning power level is performed with a predetermined duration and a predetermined periodicity.

11. Method for cleaning a heat exchanger (8) in a heating device (1) according to claim 10, wherein the method comprises the step of setting the duration and the periodicity of the cleaning cycle depending on a desired protective layer thickness of an corrosion protective layer of the first heat exchange surface (105).

12. Method for cleaning a heat exchanger (8) in a heating device (1) according to one of the claims 10-11, wherein the method comprises the step of setting the periodicity and duration of the cleaning cycle depending on the temperature of an environment around the first heat exchange surface (105), the acid concentration of the environment around the first heat exchange surface (105) and the material properties of the heat exchanger (8).

13. Method for cleaning a heat exchanger (8) in a heating device (1) according to one of the claims 10-12, wherein the method further comprises the step of setting the periodicity and duration of the cleaning cycle depending on a previous operation time and operation mode of the heating device (1).

14. Method for cleaning a heat exchanger (8) in a heating device (1) according to one of the claims 10-13, wherein the method further comprises the steps of: sequentially rotating the fan (6) at a high rotation rate and the burning of the supply fuel by the burner (2) at the burning power level and/or wherein the liquid medium is pumped by the pump (4) simultaneously with rotating the fan (6) at the high rotation rate and/or the burning of the supply fuel by the burner (2) at the burning power level.

15. Method according to one of the claims 10-14, wherein the predetermined duration is 5 minutes and the predetermined periodicity is one cleaning cycle every 24 hours.

16. Method for cleaning a heat exchanger (8) in a heating device (1) according to one of the claims 10-15, wherein the method further comprises the step of performing multiple cleaning cycles being continuously successive with a predetermined duration and a predetermined periodicity, wherein preferably the predetermined duration of the multiple cleaning cycles is 30 minutes and the predetermined periodicity of the multiple cleaning cycles is once every 24 hours.

17. Method for cleaning a heat exchanger (8) being an industrial heat exchanger according to one of the claims 10-16, wherein the method further comprises the step of cooling the heated liquid medium (29) by means of cooling means and returning cooled liquid medium to the heat exchanger.

## Patentansprüche

1. Heizvorrichtung (1) zur Bereitstellung eines erhitzten flüssigen Medium (29), umfassend:
- einen Brenner (2) zum Erzeugen eines erhitzten Verbrennungsgases, wobei der Brenner (2) zum Empfangen eines Brennersignals (3) konfiguriert ist;
- einen Wärmetauscher (8) umfassend eine Röhre mit einer Einlassöffnung (19a) und einer Auslassöffnung (19b), wobei die Außenseite der Röhre eine erste Wärmeaustauschfläche (105) zum Kontaktieren des Verbrennungsgases (32) definiert und die Innenseite der Röhre eine zweite Wärmeaustauschfläche zum Kontaktieren des flüssigen Mediums definiert;
- ein Gebläse (6) zum Bereitstellen einer Luftströmung über den Wärmetauscher (8), wobei das Gebläse (6) zum Empfangen eines Gebläsesignals (7) konfiguriert ist;
- eine Pumpe (4) zum Pumpen des flüssigen Mediums in die Einlassöffnung (19a) und aus der Auslassöffnung (19b), wobei die Pumpe (4) zum Empfangen eines Pumpsignals (5) konfiguriert ist;
wobei die Heizvorrichtung konfiguriert ist, derart zu arbeiten, dass das Verbrennungsgas (32) an der ersten Wärmeaustauschfläche (105) kondensiert, um die erste Wärmeaustauschfläche (105) durch Waschen mit dem Kondensat zu reinigen,
**gekennzeichnet durch**
- eine Steuereinheit (9) zum Ausgeben des Brennersignals (3), des Gebläsesignals (7) und des Pumpsignals (5), wobei die Steuereinheit (9) zur Bereitstellung eines Reinigungszyklus konfiguriert ist, der eine Steuerung des Brenners (2), des Gebläses (6) und der Pumpe (4) **durch** Ausgeben des jeweiligen Brennersignals (3), Gebläsesignals (7) und Pumpsignals (5) umfasst, wobei die Steuereinheit (9) zum Festlegen einer Dauer und einer Periodizität des Reinigungszyklus konfiguriert ist.

2. Heizvorrichtung (1) nach Anspruch 1, wobei die Steuereinheit (9) konfiguriert ist, die Dauer und die Periodizität des Reinigungszyklus in Abhängigkeit von einer gewünschten Schutzschichtdicke (t) einer Korrosionsschutzschicht (101) auf der ersten Wärmeaustauschfläche (105) festzulegen.

3. Heizvorrichtung (1) nach einem der vorhergehenden Ansprüche, wobei die Steuereinheit (9) konfiguriert ist, die Periodizität und Dauer in Abhängigkeit von der Temperatur einer Umgebung um die erste Wärmeaustauschfläche (105), der Säurekonzentration der Umgebung um die erste Wärmeaustauschfläche (105) und den Materialeigenschaften des Wärmetauschers (8) festzulegen.

4. Heizvorrichtung (1) nach einem der vorhergehenden Ansprüche, wobei die Steuereinheit (9) konfiguriert ist, die Periodizität und Dauer in Abhängigkeit von einer vorhergehenden Betriebszeit und Betriebsmodus der Heizvorrichtung (1) festzulegen.

5. Heizvorrichtung (1) nach einem der vorhergehenden Ansprüche, wobei die Steuereinheit (9) zum Steuern des Brenners (2), des Gebläses (6) und der Pumpe (4) durch Ausgeben des jeweiligen Brennersignals (3), Gebläsesignals (7) und Pumpsignals (5) derart konfiguriert ist, dass die folgenden Schritte ausgeführt werden:
- Verbrennen eines Versorgungsbrennstoffs durch den Brenner (2) auf einer Brennleistungsstufe derart, dass erzeugtes Verbrennungsgas (32) an der ersten Wärmeaustauschfläche (105) kondensiert;
- Rotieren des Gebläses (6) zum Bereitstellen eines Luftstroms, der die erste Wärmeaustauschfläche (105) kontaktiert, derart, dass eine konvektive Kühlung der ersten Wärmeaustauschfläche (105) bereitgestellt wird;
- Pumpen des flüssigen Mediums in den Wärmetauscher (8) durch die Pumpe (4) derart, dass überschüssige Wärme in dem Wärmetauscher (8) aus der Auslassöffnung (19b) gezogen wird.

6. Heizvorrichtung (1) nach einem der vorhergehenden Ansprüche, wobei die Steuereinheit (9) zum Steuern des Brenners (2) und Gebläses (6) durch Ausgeben des jeweiligen Brennersignals (3) und Gebläsesignals (7) derart konfiguriert ist, dass eine Verbrennung des Versorgungsbrennstoffs durch den Brenner (2) auf der Brennleistungsstufe sequentiell mit einem Rotieren des Gebläses (6) mit einer hohen Drehgeschwindigkeit durchgeführt wird.

7. Heizvorrichtung (1) nach einem der vorhergehenden Ansprüche, wobei die Steuereinheit (9) konfiguriert ist zum:
- Bereitstellen eines Reinigungszyklus mit einer Dauer gleich oder kürzer als 5 Minuten und einer Periodizität von einem Reinigungszyklus alle 24 Stunden und / oder
- Bereitstellen von mehr als einem mit Bezug zueinander kontinuierlich aufeinanderfolgenden Reinigungszyklen, wobei die Steuereinheit (9) zum Festlegen einer Dauer der mehr als einen Reinigungszyklen und einer Periodizität der mehr als einen Reinigungszyklen konfiguriert ist.

8. Heizvorrichtung (1) nach einem der vorhergehenden Ansprüche, wobei die Steuereinheit (9) konfiguriert ist zum:
- Bereitstellen von mehr als einem mit Bezug zueinander kontinuierlich aufeinanderfolgenden Reinigungszyklen mit einer Gesamtdauer von 30 Minuten und einer Periodizität von einmal jede 24 Stunden und/oder
- Bereitstellen von 6 mit Bezug zueinander in 30 Minuten kontinuierlich aufeinanderfolgenden Reinigungszyklen.

9. Industrielle Heizvorrichtung (201), umfassend eine Heizvorrichtung (1) nach einem der Ansprüche 1-8, wobei die industrielle Heizvorrichtung (201) ferner Kühlmittel zum Empfangen des erhitzten flüssigen Mediums (29) und Zurückführen gekühlten flüssigen Mediums zu dem Wärmetauscher (8) umfasst.

10. Verfahren zur Reinigung eines Wärmetauschers (8) in einer Heizvorrichtung (1), wobei die Heizvorrichtung (1) einen Brenner (2) zum Erzeugen eines erhitzten Verbrennungsgases (32) und ein Gebläse (6) zum Bereitstellen einer Luftströmung über den Wärmetauscher (8) umfasst, die Heizvorrichtung (1) ferner umfassend den Wärmetauscher (8) umfassend eine Röhre mit einer Einlassöffnung (19a) und einer Auslassöffnung (19b), wobei die Außenseite der Röhre eine erste Wärmeaustauschfläche (105) zum Kontaktieren des Verbrennungsgases (32) definiert und die Innenseite der Röhre eine zweite Wärmeaustauschfläche zum Kontaktieren eines flüssigen Mediums definiert, wobei die Heizvorrichtung (1) ferner eine Pumpe (4) zum Pumpen des flüssigen Mediums in die Einlasssöffnung (19a) und aus der Auslasssöffnung (19b) umfasst, wobei das Verfahren die Schritte umfasst:
- Bereitstellen, durch das Gebläse (6), eines Luftstroms, der die erste Wärmeaustauschfläche (105) kontaktiert, derart, dass eine konvektive Kühlung der ersten Wärmeaustauschfläche (105) bereitgestellt wird;
- Pumpen des flüssigen Mediums in den Wärmetauscher (8) durch die Pumpe (4) derart, dass überschüssige Wärme in dem Wärmetauscher (8) aus der Auslassöffnung (19b) gezogen wird;
- Verbrennen eines Versorgungsbrennstoffs durch den Brenner (2) auf einer Brennleistungsstufe derart, dass erzeugtes Verbrennungsgas (32) an der ersten Wärmeaustauschfläche (105) kondensiert, um die erste Wärmeaustauschfläche (105) durch Waschen mit dem Kondensat zu reinigen;
**dadurch gekennzeichnet, dass** ein Reinigungszyklus umfassend die Schritte zum Bereitstellen des Luftstroms, Pumpen des flüssigen Mediums und Verbrennen des Versorgungsbrennstoffs durch den Brenner (2) auf der Brennleistungsstufe mit einer vorbestimmten Dauer und einer vorbestimmten Periodizität durchgeführt wird.

11. Verfahren zum Reinigen eines Wärmetauschers (8) in einer Heizeinrichtung (1) nach Anspruch 10, wobei das Verfahren den Schritt des Festlegens der Dauer und der Periodizität des Reinigungszyklus in Abhängigkeit von einer gewünschten Schutzschichtdicke einer Korrosionsschutzschicht auf der ersten Wärmeaustauschfläche (105) umfasst.

12. Verfahren zum Reinigen eines Wärmetauschers (8) in einer Heizeinrichtung (1) nach einem der Ansprüche 10-11, wobei das Verfahren den Schritt des Festlegens der Periodizität und Dauer des Reinigungszyklus in Abhängigkeit von der Temperatur einer Umgebung um die erste Wärmeaustauschfläche (105), der Säurekonzentration der Umgebung um die erste Wärmeaustauschfläche (105) und den Materialeigenschaften des Wärmetauschers (8) umfasst.

13. Verfahren zum Reinigen eines Wärmetauschers (8) in einer Heizeinrichtung (1) nach einem der Ansprüche 10-12, wobei das Verfahren ferner den Schritt des Festlegens der Periodizität und Dauer des Reinigungszyklus in Abhängigkeit von einer vorhergehenden Betriebszeit und Betriebsmodus der Heizvorrichtung (1) umfasst.

14. Verfahren zum Reinigen eines Wärmetauschers (8) in einer Heizeinrichtung (1) nach einem der Ansprüche 10-13, wobei das Verfahren ferner die Schritte umfasst: sequentielles Rotieren des Gebläses (6) bei einer hohen Rotationsgeschwindigkeit und Verbrennen des Versorgungsbrennstoffs durch den Brenner (2) auf der Brennleistungsstufe und/oder wobei das flüssige Medium von der Pumpe (4) gleichzeitig mit dem Rotieren des Gebläses (6) bei der hohen Drehgeschwindigkeit und/oder dem Verbrennen des Versorgungsbrennstoffs durch den Brenner (2) auf der Brennleistungsstufe gepumpt wird.

15. Verfahren nach einem der Ansprüche 10-14, wobei die vorbestimmte Dauer 5 Minuten und die vorbestimmte Periodizität ein Reinigungszyklus jede 24 Stunden beträgt.

16. Verfahren zum Reinigen eines Wärmetauschers (8) in einer Heizeinrichtung (1) nach einem der Ansprüche 10-15, wobei das Verfahren ferner den Schritt der Durchführung mehrerer kontinuierlich aufeinanderfolgender Reinigungszyklen mit einer vorbestimmten Dauer und einer vorbestimmten Periodizität umfasst, wobei vorzugsweise die vorbestimmte Dauer der mehreren Reinigungszyklen 30 Minuten und die vorbestimmte Periodizität der mehreren Reinigungszyklen einmal jede 24 Stunden beträgt.

17. Verfahren zum Reinigen eines Wärmetauschers (8), der ein industrieller Wärmetauscher ist, nach einem der Ansprüche 10-16, wobei das Verfahren ferner den Schritt des Abkühlens des erhitzten flüssigen Mediums (29) durch Kühlmittel und Zurückführen gekühlten flüssigen Mediums zu dem Wärmetauscher umfasst.

## Revendications

1. Dispositif de chauffage (1) servant à produire un milieu liquide chauffé (29), comprenant :
- un brûleur (2) servant à générer un gaz de combustion chauffé, le brûleur (2) étant configuré pour recevoir un signal de brûleur (3) ;
- un échangeur de chaleur (8) comprenant un tube pourvu d'un orifice d'entrée (19a) et d'un orifice de sortie (19b), l'extérieur du tube définissant une première surface d'échange de chaleur (105) destinée à venir en contact avec le gaz de combustion (32) et l'intérieur du tube définissant une seconde surface d'échange de chaleur destinée à venir en contact avec le milieu liquide ;
- un ventilateur (6) servant à produire un flux d'air par-dessus l'échangeur de chaleur (8), le ventilateur (6) étant configuré pour recevoir un signal de ventilateur (7) ;
- une pompe (4) servant à pomper le milieu liquide pour l'introduire par l'orifice d'entrée (19a) et le faire sortir par l'orifice de sortie (19b), la pompe (4) étant configurée pour recevoir un signal de pompe (5) ;
le dispositif de chauffage étant configuré pour fonctionner de telle sorte que le gaz de combustion (32) se condense sur la première surface d'échange de chaleur (105) pour nettoyer la première surface d'échange de chaleur (105) par lavage à l'aide du produit de condensation,
**caractérisé par**
- une unité de commande (9) configurée pour émettre le signal de brûleur (3), le signal de ventilateur (7) et le signal de pompe (5), l'unité de commande (9) étant configurée pour produire un cycle de nettoyage qui comprend une commande du brûleur (2), du ventilateur (6) et de la pompe (4) par émission du signal de brûleur (3), du signal de ventilateur (7) et du signal de pompe (5) respectifs, l'unité de commande (9) étant configurée pour régler une durée du cycle de nettoyage et une périodicité du cycle de nettoyage.

2. Dispositif de chauffage (1) selon la revendication 1, dans lequel l'unité de commande (9) est configurée pour régler la durée et la périodicité du cycle de nettoyage en fonction d'une épaisseur souhaitée (t) d'une couche anticorrosion (101) sur la première surface d'échange de chaleur (105).

3. Dispositif de chauffage (1) selon l'une quelconque des revendications précédentes, dans lequel l'unité de commande (9) est configurée pour régler la périodicité et la durée en fonction de la température d'un environnement autour de la première surface d'échange de chaleur (105), de la concentration en acide de l'environnement autour de la première surface d'échange de chaleur (105) et des propriétés de la matière de l'échangeur de chaleur (8).

4. Dispositif de chauffage (1) selon l'une des revendications précédentes, dans lequel l'unité de commande (9) est configurée pour régler la périodicité et la durée en fonction d'une durée de fonctionnement précédente et d'un mode de fonctionnement du dispositif de chauffage (1) précédent.

5. Dispositif de chauffage (1) selon l'une des revendications précédentes, dans lequel l'unité de commande (9) est configurée pour commander le brûleur (2), le ventilateur (6) et la pompe (4) par émission du signal de brûleur (3), du signal de ventilateur (7) et du signal de pompe (5) respectifs de façon à réaliser les étapes suivantes consistant à :
- brûler un carburant d'alimentation au moyen du brûleur (2) à un niveau de puissance de combustion telle que le gaz de combustion généré (32) se condense sur la première surface d'échange de chaleur (105) ;
- faire tourner le ventilateur (6) pour produire un flux d'air venant en contact avec la première surface d'échange de chaleur (105) de façon à produire un refroidissement par convection de la première surface d'échange de chaleur (105) ;
- pomper le milieu liquide pour l'introduire dans l'échangeur de chaleur (8) au moyen de la pompe (4) de telle sorte que la chaleur en excès dans l'échangeur de chaleur (8) est évacuée par l'orifice de sortie (19b).

6. Dispositif de chauffage (1) selon l'une des revendications précédentes, dans lequel l'unité de commande (9) est configurée pour commander le brûleur (2) et le ventilateur (6) par émission du signal de brûleur (3) et du signal de ventilateur (7) respectifs de telle sorte qu'une combustion du carburant d'alimentation au moyen du brûleur (2) au niveau de puissance de combustion est effectuée de manière séquentielle par rotation du ventilateur (6) à une vitesse de rotation élevée.

7. Dispositif de chauffage (1) selon l'une des revendications précédentes, dans lequel l'unité de commande (9) est configurée pour :
- produire un cycle de nettoyage ayant une durée inférieure ou égale à 5 minutes et une périodicité d'un cycle de nettoyage de 24 heures et/ou
- produire plus d'un cycle de nettoyage qui se suivent en continu, l'unité de commande (9) étant configurée pour régler une durée de plus d'un cycle de nettoyage et une périodicité de plus d'un cycle de nettoyage.

8. Dispositif de chauffage (1) selon l'une des revendications précédentes, dans lequel l'unité de commande (9) est configurée pour :
- produire plus d'un cycle de nettoyage qui se suivent en continu avec une durée totale de 30 minutes et une périodicité de 24 heures et/ou
- produire 6 cycles de nettoyage qui se suivent en continu en 30 minutes.

9. Dispositif de chauffage industriel (201), comprenant un dispositif de chauffage (1) selon l'une des revendications 1 à 8, le dispositif de chauffage industriel (201) comprenant en outre des moyens de refroidissement destiné à recevoir le milieu liquide chauffé (29) et à renvoyer le milieu liquide refroidi à l'échangeur de chaleur (8).

10. Procédé de nettoyage d'un échangeur de chaleur (8) dans un dispositif de chauffage (1), le dispositif de chauffage (1) comprenant un brûleur (2) servant à générer un gaz de combustion chauffé (32) et un ventilateur (6) servant à produire un flux d'air par-dessus l'échangeur de chaleur (8), le dispositif de chauffage (1) comprenant en outre l'échangeur de chaleur (8) comprenant un tube pourvu d'un orifice d'entrée (19a) et d'un orifice de sortie (19b), l'extérieur du tube définissant une première surface d'échangeur de chaleur (105) destinée à venir en contact avec le gaz de combustion (32) et l'intérieur du tube définissant une seconde surface d'échange de chaleur destinée à venir en contact avec un milieu liquide, le dispositif de chauffage (1) comprenant en outre une pompe (4) servant à pomper le milieu liquide pour l'introduire par l'orifice d'entrée (19a) et le faire sortie par l'orifice de sortie (19b), le procédé comprenant les étapes consistant à :
- produire, au moyen du ventilateur (6), un flux d'air en destiné à venir contact avec la première surface d'échange de chaleur (105) de façon à produire un refroidissement par convection de la première surface d'échange de chaleur (105) ;
- pomper le milieu liquide pour l'introduire dans l'échangeur de chaleur (8) au moyen de la pompe (4) de telle sorte que la chaleur en excès dans l'échangeur de chaleur (8) est évacuée par l'orifice de sortie (19b) ;
- brûler un carburant d'alimentation au moyen du brûleur (2) à un niveau de puissance de combustion telle que le gaz de combustion généré (32) se condense sur la première surface d'échange de chaleur (105) pour nettoyer la première surface d'échange de chaleur (105) par lavage à l'aide du condensat,
**caractérisé en ce qu'**un cycle de nettoyage comprenant les étapes consistant à produire le flux d'air, pomper le milieu liquide et brûler le carburant d'alimentation au moyen du brûleur (2) au niveau de puissance de combustion est effectué à une durée prédéterminée et une périodicité prédéterminée.

11. Procédé de nettoyage d'un échangeur de chaleur (8) dans un dispositif de chauffage (1) selon la revendication 10, le procédé comprenant l'étape consistant à régler la durée et la périodicité du cycle de nettoyage en fonction d'une épaisseur désirée de la couche anticorrosion de la première surface d'échange de chaleur (105).

12. Procédé de nettoyage d'un échangeur de chaleur (8) dans un dispositif de chauffage (1) selon l'une des revendications 10 et 11, le procédé comprenant l'étape consistant à régler la périodicité et la durée du cycle de nettoyage en fonction de la température d'un environnement autour de la première surface d'échange de chaleur (105), la concentration en acide de l'environnement autour de la première surface d'échange de chaleur (105) et des propriétés de la matière de l'échangeur de chaleur (8).

13. Procédé de nettoyage d'un échangeur de chaleur (8) dans un dispositif de chauffage (1) selon l'une des revendications 10 à 12, le procédé comprenant en outre l'étape consistant à régler la périodicité et la durée du cycle de nettoyage en fonction d'une durée de l'opération précédente et du mode de fonctionnement du dispositif de chauffage (1) précédent.

14. Procédé de nettoyage d'un échangeur de chaleur (8) dans un dispositif de chauffage (1) selon l'une des revendications 10 à 13, le procédé comprenant en outre les étapes consistant à : faire tourner séquentiellement le ventilateur (6) à une vitesse de rotation élevée et brûler le carburant d'alimentation au moyen du brûleur (2) au niveau de puissance de combustion et/ou le milieu liquide étant pompé par la pompe (4) tout en faisant tourner le ventilateur (6) à la vitesse de rotation élevée et/ou en brûlant le carburant d'alimentation au moyen du brûleur (2) au niveau de puissance de combustion.

15. Procédé selon l'une des revendications 10 à 14, dans lequel la durée prédéterminée est de 5 minutes et la périodicité prédéterminée est d'un cycle de nettoyage toutes les 24 heures.

16. Procédé de nettoyage d'un échangeur de chaleur (8) dans un dispositif de chauffage (1) selon l'une des revendications 10 à 15, le procédé comprenant en outre l'étape consistant à effectuer plusieurs cycles de nettoyage qui se suivent en continu avec une durée prédéterminée et une périodicité prédéterminée, de préférence la durée prédéterminée des multiples cycles de nettoyage étant de 30 minutes et la périodicité prédéterminée des multiples cycles de nettoyage étant de 24 heures.

17. Procédé de nettoyage d'un échangeur de chaleur (8) dans un échangeur de chaleur industriel selon l'une des revendications 10 à 16, le procédé comprenant en outre l'étape consistant à refroidir le milieu liquide chauffé (29) à l'aide d'un moyen de refroidissement et à ramener le milieu liquide refroidi à l'échangeur de chaleur.
